(19) Europäisches Patentamt
European Patent Office
Office européen des brevets

(11) **EP 4 200 737 B1**

(12) **EUROPÄISCHE PATENTSCHRIFT**

(45) Veröffentlichungstag und Bekanntmachung des Hinweises auf die Patenterteilung:
**19.06.2024  Patentblatt 2024/25**

(21) Anmeldenummer: **21749061.4**

(22) Anmeldetag: **23.07.2021**

(51) Internationale Patentklassifikation (IPC):
**G06F 21/64** *(2013.01)*       **H04L 9/40** *(2022.01)*

(52) Gemeinsame Patentklassifikation (CPC):
**H04L 63/1466; G06F 21/64; H04L 63/123**

(86) Internationale Anmeldenummer:
**PCT/AT2021/060258**

(87) Internationale Veröffentlichungsnummer:
**WO 2022/036378 (24.02.2022 Gazette 2022/08)**

(54) **VERFAHREN ZUR DATENMANIPULATIONSERKENNUNG VON NUMERISCHEN DATENWERTEN**

METHOD FOR DATA MANIPULATION DETECTION  OF NUMERICAL DATA VALUES

PROCÉDÉ DE DÉTECTION DE MANIPULATION DE DONNÉES RELATIVE À DES VALEURS DE DONNÉES NUMÉRIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.08.2020  AT 602572020**
**02.06.2021  AT 504522021**

(43) Veröffentlichungstag der Anmeldung:
**28.06.2023  Patentblatt 2023/26**

(73) Patentinhaber: **Legitary GmbH**
**1040 Wien (AT)**

(72) Erfinder:
• **MUMIC, Nermina**
**1120 Wien (AT)**
• **FILZMOSER, Peter**
**8250 Vorau (AT)**

• **LOIBL, Günter**
**3430 Tulln an der Donau (AT)**

(74) Vertreter: **Wildhack & Jellinek Patentanwälte**
**Patentanwälte OG**
**Landstraßer Hauptstraße 50**
**1030 Wien (AT)**

(56) Entgegenhaltungen:
**US-A1- 2008 208 946**

• **BADAL-VALERO ELENA ET AL: "Combining Benford's Law and machine learning to detect money laundering. An actual Spanish court case", FORENSIC SCIENCE INTERNATIONAL, ELSEVIER B.V, AMSTERDAM, NL, Bd. 282, 11. November 2017 (2017-11-11), Seiten 24-34, XP085313369, ISSN: 0379-0738, DOI: 10.1016/J.FORSCIINT.2017.11.008**

**Beschreibung**

Die Erfindung bezieht sich auf ein Verfahren zur Datenmanipulationserkennung von numerischen Datenwerten, insbesondere von numerischen Zugriffsdaten auf Mediendatenströme, mit einer Prüfvorrichtung.

Bei der Authentizitätsprüfung von numerischen Datenwerten ist der Einsatz des Benfordtests bekannt. Der Benfordtest beruht auf der Beobachtung, dass bei einem Datensatz mit ausreichend vielen Zahlenwerten die Anfangs- ziffernhäufigkeit $b_j$ der Ziffern j= 1, ..., 9 unterschiedlich, nämlich gemäß einer Benfordverteilung

$$b_j = \log\left( 1 + \frac{1}{j} \right)$$

, verteilt sind. Folgen die zu überprüfenden Zahlen nicht dieser Benfordverteilung, so deutet dies auf einen manipulierten Datensatz hin. Nachteilig daran ist allerdings, dass die Datensätze als Voraussetzung für den Einsatz des Benfordtests zufälligen Ursprungs sein müssen, sodass eine voranstehende Vorauswahl bzw. Gruppierung der Datensätze das Ergebnis verfälschen kann. Aus diesem Grund ist der Einsatz eines klassischen Benfordtests für ein Verfahren zur Datenmanipulationserkennung für aus einem großen Datensatz vorausgewählte numerische Datenwerte einer bestimmten Kategorie oder Gruppe, beispielsweise Zugriffszahlen auf Mediendatenströme eines Künstlers oder eines Songtitels eines Netzwerks, wie eine Streamingplattform, nur bedingt geeignet.

Speziell zur Datenmanipulationserkennung von vorausgewählten Datenwerten ist aus der WO2018211060A1 ein Verfahren bekannt, welches von unterschiedlichen Netzwerken, beispielsweise unterschiedliche Streamingplattformen, bezogene Datensätze miteinander vergleicht. Die zu vergleichenden numerischen Datenwerte der Datensätze, beispielsweise Zugriffszahlen auf Mediendatenströme eines Songtitels über einen bestimmten Zeitraum, werden dabei einer Kompositionsdatentransformation unterzogen. Unter der Annahme, dass sich die Datenwerte unterschiedlicher Netzwerke für einen gleichen Zeitraum ähnlich verhalten, deuten Irregularitäten in diesem Ähnlichkeitsverhalten zueinander auf eine Manipulation hin. Nachteilig daran ist allerdings, dass für diese Datenmanipulationserkennung bereits ein relativ spezifischer Datensatz, bestehend aus Datenwerten wenigstens drei unterschiedlicher Netzwerke für den gleichen Beobachtungszeitraum, notwendig ist. Demnach kann eine Datenmanipulationserkennung nur für Netzwerke erfolgen, für die es auch wenigstens zwei sich bezüglich des Datenstromverhaltens ähnlich verhaltende Referenznetzwerke gibt.

Der wissenschaftliche Aufsatz Badal-Valero Elena et al.: "Combining Benford's Law and machine learning to detect money laundering. An actual Spanish court case", Forensic Science International, Elsevier B.V., Amsterdam, NL, Bd. 282, vom 11. November 2017, S. 24-34, XP085313369, ISBN: 0379-0738, DOI: 10.1016/J.FORSCIINT.2017.11.008 lehrt ein Verfahren zum Erkennen manipulierter Daten bei Geldtransaktionen zwischen betrügerischen Firmen. Unter Anwendung des Benfordtests wird eine künstliche Intelligenz darin trainiert, ausgehend von bekannten betrügerischen Transaktionen weitere zu detektieren. Nachteilig an diesem Verfahren ist, dass es nicht ressourcenschonend arbeitet und nicht auf kleinere Datensätze angewendet werden kann.

Der Erfindung liegt somit die Aufgabe zugrunde, ein ressourcenschonendes und rasch durchzuführendes Verfahren zur Datenmanipulationserkennung vorzuschlagen, welches unabhängig von Grad der Aufbereitung und weitgehend unabhängig vom Umfang des Datensatzes eine valide Aussage über potentielle Datenmanipulationen von Gruppen zugeordneten Datenwerten erlaubt, ohne dabei auf Datenwerte von Referenznetzwerken angewiesen zu sein.

Die Erfindung löst die gestellte Aufgabe dadurch, dass zunächst aus den nach der Benfordverteilung erwarteten Häufigkeiten vorgegebener Anfangszifferngruppen in einer Transformationseinheit der Prüfvorrichtung durch eine die Häufigkeiten in Relation zueinander abbildende Kompositionsdatentransformation in Form einer Pivot- Kompositionsdatentransformation, ein Benfordvektor ermittelt wird, wiederholt mit einem Zufallsgenerator der Prüfvorrichtung zufallsverteilte Zahlenwerte erzeugt und aus den Häufigkeiten der Anfangszifferngruppen der zufallsverteilten Zahlenwerte durch die Transformationseinheit mehrere Simulationsvektoren ermittelt werden, für jeden Simulationsvektor mittels einer Detektionseinheit eine Simulationsabweichung vom Benfordvektor in Form eines Mahalanobis-Abstandes ermittelt und in einem Prüfspeicher der Prüfvorrichtung abgespeichert wird, wonach eine Gruppe von numerischen Datenwerten über eine Eingabeschnittstelle der Prüfvorrichtung eingelesen, aus den Häufigkeiten der Anfangszifferngruppen in den numerischen Datenwerten der Gruppen durch die Transformationseinheit ein Testvektor und eine Testabweichung des Testvektors vom Benfordvektor in Form eines Mahalanobis-Abstandes durch die Detektionseinheit ermittelt wird, wonach durch eine Prüfeinheit der Prüfvorrichtung die relative Anzahl jener abgespeicherter Simulationsabweichungen ermittelt wird, die größer als die Testabweichung sind und ein positiver Manipulationswert über eine Ausgabeschnittstelle ausgegeben wird, wenn die relative Anzahl einen vorgegeben Schwellwert unterschreitet.

Der Erfindung liegt die Überlegung zugrunde, dass ein Benfordtest für vorausgewählte Gruppen von numerischen Datenwerten eine nur unzureichende Genauigkeit für die Erkennung von Manipulationen aufweist, weil einerseits die Anzahl der numerischen Datenwerte verhältnismäßig klein sein kann und andererseits die Datenwerte nicht notwendigerweise ein natürliches Wachstumsverhalten abbilden. Insbesondere ergibt sich daraus die Schwierigkeit, dass für eine technische Anwendung der Grenzwert für eine zulässige Abweichung von der Benfordverteilung unbekannt ist.

Zufolge der erfindungsgemäßen Merkmale kann diese Schwierigkeit überwunden werden, indem die erwartete Abweichung der Häufigkeiten der Anfangszifferngruppen einer vorausgewählten Gruppe von numerischen Datenwerten von einer Benfordverteilung anhand der Simulation mit zufallsverteilten Zahlenwerten ermittelt und daraus eine für die Datenmanipulationserkennung maximal zulässige Testabweichung T für die zu überprüfenden numerischen Datenwerte abgeleitet werden. Darüber hinaus bringt das Vorsehen einer Kompositionsdatentransformation für die Häufigkeit vorgegebener Anfangszifferngruppen den wesentlichen Vorteil mit sich, dass nicht die Häufigkeiten der Anfangszifferngruppen für sich, sondern deren Verhältnisse zueinander bei der Überprüfung berücksichtigt werden. Die erfindungsgemäße Kompositionsdatentransformation erhöht somit die Manipulationssicherheit, weil selbst bei innerhalb eines akzeptablen Bereichs liegenden Häufigkeiten der Anfangszifferngruppen für sich eine Manipulation detektiert werden kann, wenn sich lediglich deren Verhältnisse zueinander ändern. Eine solche Kompositionsdatentransformation kann beispielsweise eine Transformation eines Vektors an Häufigkeiten der vorgegebenen Anfangszifferngruppen in Pivot-Koordinaten sein. Aufgrund der Kompositionsdatentransformation und aufgrund des Umstandes, dass für eine valide Datenmanipulationserkennung eine große Anzahl von die Häufigkeiten der Anfangszifferngruppen einer Gruppe von Zufallszahlen abbildenden Simulationsvektoren $\bar{z}_{bi}$ sowie deren Simulationsabweichung $T_i$ von einer Benfordverteilung bestimmt werden müssen, ist die Simulation rechenintensiv und somit zeitaufwendig. Ein wesentlicher Vorteil der Erfindung besteht daher darin, dass die Simulationsabweichungen $T_i$ nach der Simulation in einem Prüfspeicher einer Prüfvorrichtung abgespeichert werden, sodass zu überprüfende numerische Datenwerte in weiterer Folge ohne die Durchführung von Simulationen und ohne das Erfordernis von Vergleichsdatensätzen ressourcensparend auf etwaige Manipulationen überprüft werden können.

Ein erster rechenintensiver Schritt erfolgt somit ohne die zu überprüfenden Datenwerte. Hierzu wird zunächst ein Häufigkeitsvektor $\bar{b}$ bestimmt, welcher die gemäß einer Benfordverteilung

$$b_j = \log\left(1 + \frac{1}{j}\right)$$

zu erwartende Häufigkeit $(b_1, ..., b_D)$ vorgegebener Anfangszifferngruppen, beispielsweise die ersten Ziffern 1-9

$$\bar{b} = (b_1, ..., b_9) = \left(\log\left(1 + \frac{1}{1}\right), ..., \log\left(1 + \frac{1}{9}\right)\right)$$

oder die ersten beiden Ziffern 10-99,

$$\bar{b} = (b_{10}, ..., b_{99}) = \left(\log\left(1 + \frac{1}{10}\right), ..., \log\left(1 + \frac{1}{99}\right)\right)$$

jedes Zahlenwertes abbildet. Die Dimension D des Häufigkeitsvektor $\bar{b}$ ist demnach von der Anzahl der vorgegebenen Anfangszifferngruppen abhängig. Grundsätzlich kann die Auswahl der Anfangszifferngruppen beliebig sein, jedoch muss jeder zu überprüfende Datenwert eine Anfangszifferngruppe enthalten, sodass sich je nach Datenwerten entsprechende Einschränkungen für die mögliche Wahl der Anfangszifferngruppen ergeben.

Der Häufigkeitsvektor $\bar{b}$ wird durch eine Transformationseinheit der Prüfvorrichtung mittels Kompositionsdatentransformation zu einem Benfordvektor

$$\bar{z}_b = (z_1, ..., z_{D-1})$$

transformiert, wodurch die Relationen der durch einen Häufigkeitsvektor abgebildeten Häufigkeiten der Ziffern zueinander beschrieben werden, um in weiterer Folge die Manipulationserkennung zu verbessern. Bei der Kompositionsdatentransformation reduziert sich die Dimension D des Benfordvektors $\bar{z}_b$ um 1, in dem beispielsweise eine Komponente des Vektors durch die anderen Komponenten und der bekannten Gesamtsumme aller Komponenten ausgedrückt wird. Hierfür ist in der Regel eine Normalisierung des Vektors erforderlich. Neben der Ermittlung des Benfordvektors $\bar{z}_b$ wird eine Vielzahl $N_s$, beispielsweise 1000 - 1000000, vorzugsweise 10000 - 100000, an Sätzen zufallsverteilter Zahlenwerte ermittelt, für die die Häufigkeiten der gewählten Anfangszifferngruppen je Satz in einem Häufigkeitsvektor $\bar{b}_i$ zusam-

mengefasst und daraus durch die Transformationseinheit ein Simulationsvektor $\overline{z}_{bi}$ erstellt wird. Sind die zufallsverteilten Zahlenwerte gleichverteilt, so folgen die Anfangsziffergruppen je Satz grundsätzlich der Benfordverteilung, weichen aber im Einzelfall mit einem gewissen Fehler davon ab, genauso wie dies auch für die zu überprüfenden Datenwerte zu erwarten ist. Dementsprechend weichen auch die Simulationsvektoren $\overline{z}_{bi}$ vom Benfordvektor $z_b$ ab. Mittels einer Detektionseinheit wird zum Abschluss des rechenintensiven Schrittes für jeden Simulationsvektor $\overline{z}_{bi}$ eine Simulationsabweichung $T_i$ vom Benfordvektor $\overline{z}_b$ ermittelt und in einem Prüfspeicher der Prüfvorrichtung abgespeichert. Zwar erfordert dieser erste Schritt große Rechenleistung, jedoch können die abgespeicherten Simulationsabweichungen $T_i$ zum Überprüfen beliebiger numerischer Datenwerte herangezogen werden, die einer hinreichend ähnlichen Zufallsverteilung folgen.

Hierzu werden in einem zweiten, ressourcenschonenden und damit rasch durchzuführenden Schritt die zu überprüfenden Datenwerte über eine Eingabeschnittstelle der Prüfvorrichtung eingelesen, wonach in analoger Weise aus den Häufigkeiten ($x_1$, ..., $x_D$) der gewählten Anfangsziffergruppen, beispielsweise die Anfangsziffern 1 - 9, der Datenwerte ein Häufigkeitsvektor

$$\bar{x} = (x_1, \dots, x_D)$$

mit Hilfe einer Zähleinheit erzeugt wird. Dieser Häufigkeitsvektor $\bar{x}$ wird mit Hilfe der Transformationseinheit einer Kompositionsdatentransformation unterzogen, wodurch ein Testvektor

$$\bar{z} = (z_1, \dots, z_{D-1})$$

erzeugt wird. Anschließend wird durch die Detektionseinheit eine Testabweichung $T$ zwischen Testvektor $z$ und Benfordvektor $\overline{z}_b$ ermittelt.

In einem finalen Schritt ermittelt eine Prüfeinheit der Prüfvorrichtung die relative Anzahl $p$ jener abgespeicherter Simulationsabweichungen $T_i$, die größer als die Testabweichung $T$ sind.

$$p = \frac{\{T_i > T, i = 1, \dots, N_s\}}{N_s}$$

Bei Unterschreitung dieser relativen Anzahl $p$ unter einen vorgegebenen Schwellwert wird ein positiver Manipulationswert für die über die Eingabeschnittstelle eingelesenen Datenwerte über eine Ausgabeschnittstelle ausgegeben.

Zwar bietet bereits die Manipulationserkennung von numerischen Datenwerte eines Gesamtdatensatzes, beispielsweise sämtlicher Zugriffszahlen auf alle Mediendatenströme eines Netzwerks, Vorteile, allerdings ist in der Praxis relevant, ob die Datenwerte einer bestimmten Kategorie dieses Datensatzes manipuliert wurden. Beispielsweise soll also überprüft werden, ob die Zugriffszahlen auf Mediendatenströme eines bestimmten Künstlers oder eines bestimmten Musikstückes manipuliert wurden. Es ist daher im Sinne einer zeiteffizienten Datenmanipulationserkennung und einer an variierende Überprüfungsanforderungen anpassbaren Datenmanipulationserkennung, dass aus einem Datensatz von unterschiedlichen Kategorien zugeordneten numerischen Datenwerten mit einer Filtereinheit anhand vorgegebener Filterparameter Kategorien ausgewählt und die den Kategorien zugewiesenen numerischen Datenwerte als Gruppe an die Eingabeschnittstelle der Prüfvorrichtung übergeben werden. Gerade diese Vorauswahl beeinträchtigt eine zuverlässige Überprüfung per Benfordtest für sich und erst die erfindungsgemäßen Maßnahmen, insbesondere die Simulation einer Vielzahl solcher möglicher Gruppen, ermöglichen eine zuverlässige Manipulationserkennung, ohne dass Vergleichswerte aus anderen Datenquellen herangezogen werden müssten.

Als geeignete Kompositionsdatentransformation der Transformationseinheit hat sich eine Pivot-Koordinatentransformation herausgestellt. Die Transformation beispielsweise eines Häufigkeitsvektors $\bar{b}$ zum Benfordvektor $\overline{z}_b$ kann demnach für die einzelnen Vektorkomponenten $\overline{z}_j$ nach der Formel

$$z_j = \sqrt{\frac{D-j}{D-j+1}} \ln \frac{b_j}{\sqrt[D-j]{\prod_{k=j+1}^{D} b_k}} \quad \text{für } j = 1, \dots, D-1$$

erfolgen. Die Transformation zum Testvektor $\bar{z}$ und zu den Simulationsvektoren $\bar{z}_{bi}$ erfolgt analog. Der Einsatz der Pivot-Koordinatentransformation hat den Vorteil, dass Pivot-Koordinaten isometrisch sind und einen orthogonalen Vektorraum aufspannen, sodass die Bestimmung der Abweichung zwischen solchen Pivot-Koordinaten besonders einfach erfolgen kann.

Zur Ermittlung der Simulationsabweichungen $T_i$ und der Testabweichung T durch die Detektionseinheit können multivariate Verfahren eingesetzt werden. Hierzu kann die Detektionseinheit für einen eingehenden Vektor $\bar{z}$, $\bar{z}_{bi}$ beispielsweise dessen Mahalanobis-Abstand zum Benfordvektor $\bar{z}_b$ ausgeben.

Dieser Mahalanobis-Abstand zwischen den Simulationsvektoren $\bar{z}_{bi}$ und dem Benfordvektor $\bar{z}_b$ bzw. zwischen dem Testvektor z und dem Benfordvektor $\bar{z}_b$ kann durch

$$T_i = (\bar{z}_{bi} - \bar{z}_b)' D^{-1/2} R_k^{-1} D^{-1/2} (\bar{z}_{bi} - \bar{z}_b)$$

$$T = (\bar{z} - \bar{z}_b)' D^{-1/2} R_k^{-1} D^{-1/2} (\bar{z} - \bar{z}_b)$$

berechnet werden.

D ist dabei die Diagonalmatrix D = diag(S) der Kovarianzmatrix S der Simulationsvektoren $\bar{z}_{bi}$. $R_k^{-1}$ ist eine inverse rangreduzierte Korrelationsmatrix, welche durch Eigenwertzerlegung von

$$R = D^{-1/2} S D^{-1/2}$$

mit

$$R = GAG'$$

, wobei G $(g_1, ..., g_k)$ der Eigenvektor von R und A die korrespondierenden Eigenwerte $a_1, ..., a_{D-1}$ sind, zu

$$R_k^{-1} = G_k A_k^{-1} G_k'$$

mit $G_k = (g_1, ..., g_k)$ und $A_k^{-1} = \mathrm{Diag}(1/a_1, ..., 1/a_k)$ für k $\in \{1,..., D - 1\}$ umgeformt werden kann.

Da der Term $D^{-1/2} R_k^{-1} D^{-1/2}$ bei der Berechnung von $T_i$ und T nur von den Simulationsvektoren $\bar{z}_{bi}$ abhängig ist, kann dieser ebenfalls unabhängig von den zu überprüfenden Datenwerten erfolgen und im Prüfspeicher hinterlegt werden. Die Verwendung einer rangreduzierten Korrelationsmatrix $R_k^{-1}$ bringt dabei den Vorteil mit sich, dass die Manipulationsprüfung für nachfolgende Gruppen von Datenwerten besonders ressourcenschonend und damit rasch durchgeführt werden kann, weil damit die benötigten Rechenoperationen in jedem Prüfschritt deutlich reduziert werden können. Insbesondere wird erfindungsgemäß eine Rangreduktion um einen Faktor von 10 - 30 vorgeschlagen, wobei gute Ergebnisse mit einer Korrelationsmatrix $R_k^{-1}$ eines Rangs k von 3 bis 10, vorzugsweise von 3 oder 4, erreicht werden können.

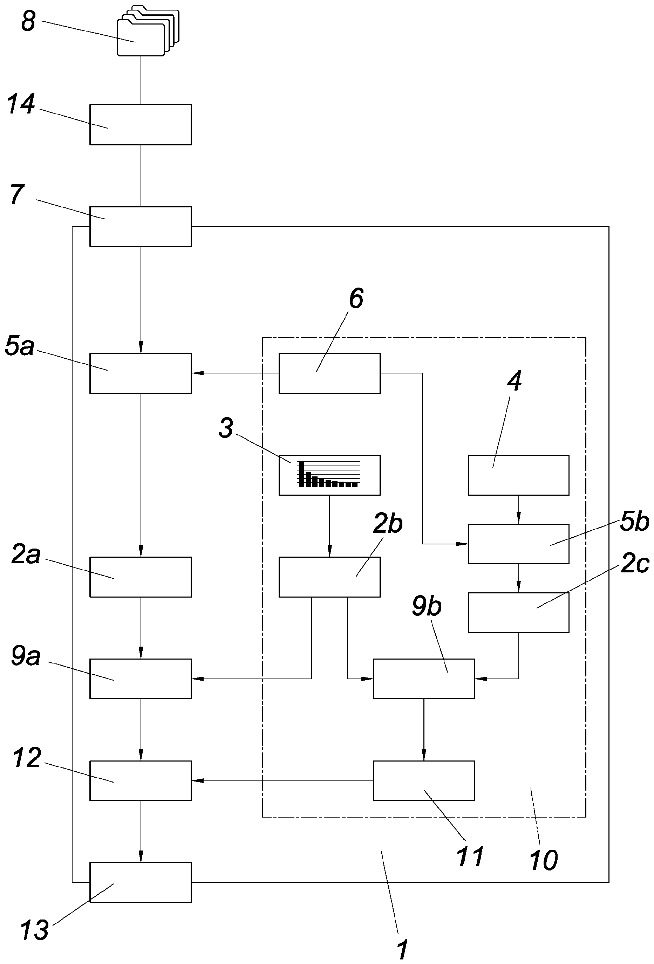

In der Zeichnung ist der Erfindungsgegenstand beispielsweise dargestellt. Die Zeichnung zeigt ein schematisches Fließschema des erfindungsgemäßen Verfahrens.

Ein erfindungsgemäßes Verfahren zur Datenmanipulationserkennung von numerischen Datenwerten wird durch eine Prüfvorrichtung 1 durchgeführt, welche eine Transformationseinheit 2a, b, c umfasst. Eine Transformationseinheit 2b empfängt dabei Datenströme aus einem Benfordspeicher 3, auf dem Häufigkeitsvektoren $\bar{b}$, welcher die gemäß einer Benfordverteilung

$$b_j = \log\left(1 + \frac{1}{j}\right)$$

zu erwartende Häufigkeit vorgebbarer Anfangsziffergruppen $(b_1, ..., b_D)$ abbilden, abgespeichert sind. Werden als Anfangsziffergruppe $(b_1, ..., b_D)$ die ersten Ziffern 1 bis 9 gewählt, so lautet der Benfordvektor

$$\bar{b} = (b_1, ..., b_9) = \left(\log\left(1 + \frac{1}{1}\right), ..., \log\left(1 + \frac{1}{9}\right)\right)$$

Eine Transformationseinheit 2c empfängt Datenströme von einem Zufallsgenerator 4, der Sätze zufallsverteilter Zahlenwerte erzeugt. Eine Zähleinheit 5b ermittelt die Anzahl der in einem Speicher 6 vorgegebenen Anfangszifferngruppen in den zufallsverteilten Zahlenwerten und gibt daraus $N_s$ Zufallsvektoren $\bar{b}_i$ (i = 1 ...$N_s$) aus, welche die Häufig-keiten der vorgegebenen Anfangsziffergruppen der zufallsverteilten Zahlenwerte abbilden. $N_s$ kann beispielsweise 1000 - 100000 betragen. Als zufallsverteilte Zahlenwerte können die Werte $10^{ul}$ herangezogen werden, wobei ul Zufallszahlen aus einer Gleichverteilung sind, und I = 1, ..., N ist, wobei N beispielsweise gleichhoch wie $N_s$ gewählt sein kann. Auf diese Weise kann sichergestellt werden, dass $N_s$ Sätze von N Zahlenwerten erzeugt werden, wobei die Anzahl Anfangsziffergruppen mit Abweichungen der Benfordverteilung folgt. Eine Transformationseinheit 2a empfängt Datenwerte eines Datensatzes 8, wobei über eine Zähleinheit 5a aus den Häufigkeiten der Anfangsziffergruppen $(x_1, ..., x_D)$ der Datenwerte ein Häufigkeitsvektor

$$\bar{x} = (x_1, ..., x_9)$$

erzeugt wird, wobei die Komponenten die Häufigkeiten der Angangsziffergruppen repräsentieren. Beginnen beispiels-weise 183 Datenwerte mit der Ziffer 1, 93 Datenwerte mit der Ziffer 2 usw. so kann $x_1 = 183$, $x_2 = 93$ usw. sein.

Die Transformationseinheiten 2a, 2b, 2c verarbeiten die Häufigkeitsvektoren $\bar{x}, \bar{b}, \bar{b}_i$ (i = 1 ...$N_s$) und führen für jeden Vektor eine Kompositionsdatentransformation durch, wodurch die durch die Koordinaten der Häufigkeitsvektoren $\bar{x}, \bar{b}, \bar{b}_i$ (i = 1 ...$N_s$) repräsentierten Häufigkeiten der Anfangsziffergruppen in Relation zueinander gebracht werden. Dies kann durch Transformation in Pivot-Koordinaten erfolgen.

Eine Detektionseinheit 9a empfängt die Datenströme der Transformationseinheit 2a, 2b und ermittelt anschließend eine der Testabweichung T zwischen dem Testvektor $\bar{z}$ und dem Benfordvektor $\bar{z}_b$. Eine Detektionseinheit 9b empfängt die Datenströme der Transformationseinheit 2b, 2c und ermittelt anschließend eine der Simulationsabwei-chungen $T_i$ zwischen dem Simulationsabweichungen $T_i$ (i=1 ,...,$N_s$) und dem Benfordvektor $\bar{z}_b$. Eine erfindungsgemäße Prüfvorrichtung kann ein oder mehrere Transformationseinheiten 2a, 2b, 2c und ein oder mehrere Detektionseinheiten 9a, 9b umfassen. In der Zeichnung sind zur besseren Illustration der Datenflüsse mehrere Transformationseinheiten 2a, 2b, 2c und mehrere Detektionseinheiten 9a, 9b dargestellt. Gleiches gilt für die Zähleinheiten 5a und 5b. Zur Ermittlung der Simulationsabweichungen $T_i$ und der Testabweichung T durch die Detektionseinheit 9a, 9b können multivariate Verfahren eingesetzt werden. Hierfür eignet sich beispielsweise die Berechnung des Mahalanobis-Abstands zwischen den Simulationsvektoren $\bar{z}_{bi}$ und dem Benfordvektor $\bar{z}_b$ bzw. zwischen dem Testvektor $\bar{z}$ und dem Benfordvektor $\bar{z}_b$.

Da die Verfahrensschritte zum Erlangen der Simulationsabweichungen $T_i$ (i=1, ..., $N_s$) unabhängig vom zu überprüfenden Datensatz 8 durchgeführt werden können, können diese zeitintensiven Schritte vorab in einem Bereich 10 durchgeführt und die Simulationsabweichungen $T_i$ (i=1, ..., $N_s$) in einem Prüfspeicher 11 hinterlegt werden.

Eine Prüfeinheit 12 kann auf die auf dem Prüfspeicher 11 hinterlegten Simulationsabweichungen $T_i$ zugreifen und ermittelt die relative Anzahl jener abgespeicherten Simulationsabweichungen $T_i$, die größer als die von der Detektionseinheit 9a empfangene Testabweichung T sind. Bei Unterschreitung der relativen Anzahl p

$$p = \frac{\{T_i > T, i = 1, ..., N_s\}}{N_s}$$

unter einen bestimmten Schwellwert, beispielsweise 0,05, wird ein positiver Manipulationswert durch eine Ausgabeschnittstelle 13 ausgegeben.

Ein p-Wert von p=1 bedeutet beispielsweise, dass alle Simulationsabweichungen $T_i$ größer als T sind. In diesem Fall sind die Anfangsziffergruppen der numerischen Datenwerte benfordverteilt, was auf einen nicht manipulierten Datensatz hinweist. Ein signifikant niedrigerer p-Wert deutet hingegen auf eine Datenmanipulation hin.

Der Eingabeschnittstelle 7 kann eine Filtereinheit 14 vorgeschaltet sein, welche aus einem Datensatz 8 von unterschiedlichen Kategorien zugeordneten numerischen Datenwerten anhand vorgegebener Filterparameter Kategorien auswählt und nur die den ausgewählten Kategorien zugewiesenen numerische Datenwerte als Gruppe an die Eingabeschnittstelle 7 übergibt. Auf diese Weise kann nur ein Teil des Datensatzes überprüft werden, wodurch beispielsweise nur bestimmte Sachverhalte, wie die Zugriffszahlen auf Mediendatenströme eines bestimmten Künstlers, überprüft werden können.

**Patentansprüche**

1. Verfahren zur Datenmanipulationserkennung von numerischen Datenwerten, insbesondere von numerischen Zugriffsdaten auf Mediendatenströme, mit einer Prüfvorrichtung (1), wobei zunächst aus den nach der Benfordverteilung erwarteten Häufigkeiten vorgegebener Anfangsziffengruppen in einer Transformationseinheit (2b) der Prüfvorrichtung (1) durch eine die Häufigkeiten in Relation zueinander abbildende Kompositionsdatentransformation in Form einer Pivot-Kompositionsdatentransformation, ein Benfordvektor ($\overline{z}_b$) ermittelt wird, wiederholt mit einem Zufallsgenerator (4) der Prüfvorrichtung (1) zufallsverteilte Zahlenwerte erzeugt und aus den Häufigkeiten der Anfangsziffengruppen der zufallsverteilten Zahlenwerte durch die Transformationseinheit (2c), welche dieselbe Kompositionsdatentransformation wie für die Anfangsgruppenhäufigkeiten durchführt, mehrere Simulationsvektoren ($\overline{z}_{bi}$) ermittelt werden, für jeden Simulationsvektor ($\overline{z}_{bi}$) mittels einer Detektionseinheit (9b) eine Simulationsabweichung ($T_i$) vom Benfordvektor ($\overline{z}_b$) in Form eines Mahalanobis-Abstandes ermittelt und in einem Prüfspeicher (11) der Prüfvorrichtung (1) abgespeichert wird, wonach eine Gruppe von numerischen Datenwerten über eine Eingabeschnittstelle (7) der Prüfvorrichtung (1) eingelesen, aus den Häufigkeiten der Anfangsziffengruppen in den numerischen Datenwerten der Gruppen durch die Transformationseinheit (2a) ein Testvektor ($\overline{z}$) und eine Testabweichung (T) des Testvektors ($\overline{z}$) vom Benfordvektor ($\overline{z}_b$) in Form eines Mahalanobis-Abstandes durch die Detektionseinheit (9a) ermittelt wird, wonach durch eine Prüfeinheit (12) der Prüfvorrichtung (1) die relative Anzahl (p) jener abgespeicherter Simulationsabweichungen ($T_i$) ermittelt wird, die größer als die Testabweichung (T) sind und ein positiver Manipulationswert über eine Ausgabeschnittstelle (13) ausgegeben wird, wenn die relative Anzahl einen vorgegeben Schwellwert unterschreitet.

2. Verfahren nach Anspruch 1, **dadurch gekennzeichnet, dass** aus einem Datensatz (8) von unterschiedlichen Kategorien zugeordneten numerischen Datenwerten mit einer Filtereinheit (14) anhand vorgegebener Filterparameter Kategorien ausgewählt und die den Kategorien zugewiesenen numerischen Datenwerte als Gruppe an die Eingabeschnittstelle (7) der Prüfvorrichtung (1) übergeben werden.

**Claims**

1. Method for detecting data manipulation of numerical data values, in particular numerical access data to media data streams, with a testing device (1), wherein firstly, a Benford vector ($\overline{z}_b$) is determined from the frequencies of predetermined leading digit groups, expected according to the Benford distribution, in a transformation unit (2b) of the testing device (1) by way of a composition data transformation in the form of a pivot composition data transformation that maps the frequencies in relation to one another, wherein randomly distributed numerical values are repeatedly generated with a random generator (4) of the testing device (1) and several simulation vectors ($\overline{z}_{bi}$) are determined from the frequencies of the leading digit groups of the randomly distributed numerical values by the transformation unit (2c), which carries out the same composition data transformation as for the leading group frequencies, wherein, for each simulation vector ($\overline{z}_{bi}$), by means of a detection unit (9b), a simulation deviation ($T_i$) from the Benford vector ($\overline{z}_b$) is determined in the form of a Mahalanobis distance and is stored in a test memory (11) of the testing device (1), wherein, after a group of numerical data values is read in via an input interface (7) of the testing device (1), from the frequencies of the leading digit groups in the numerical data values of the groups by way of the transformation unit (2a), a test vector (z) and a test deviation (T) of the test vector (z) from the Benford vector ($\overline{z}_b$) in the form of a Mahalanobis distance is determined by the detection unit (9a), after which, by a testing unit (12) of the testing device (1), the relative number (p) of those stored simulation deviations ($T_i$) that are greater than the test deviation (T) is determined and a positive manipulation value is output via an output interface (13) if the relative number falls below a predetermined threshold value.

2. Method according to claim 1, **characterized in that** categories are selected from a data set (8) of numerical data values assigned to different categories, with a filter unit (14) based on predetermined filter parameters, and the numerical data values allocated to the categories are transferred as a group to the input interface (7) of the testing device (1).

**Revendications**

1. Procédé de détection de manipulation de données de valeurs de données numériques, en particulier de données d'accès numériques à des flux de données de médias, avec un dispositif de contrôle (1), dans lequel en premier lieu un vecteur de Benford ($\bar{z}_b$) est calculé à partir des fréquences attendues, selon la distribution de Benford, de groupes de chiffres initiaux prédéfinis dans une unité de transformation (2b) du dispositif de contrôle (1) par une transformation de données de composition reproduisant les fréquences en relation les unes par rapport aux autres sous la forme d'une transformation de données de composition pivot, des valeurs numériques réparties de manière aléatoire sont générées de manière répétée avec un générateur aléatoire (4) du dispositif de contrôle (1) et plusieurs vecteurs de simulation ($\bar{z}_{bi}$) sont calculés à partir des fréquences des groupes de chiffres initiaux des valeurs numériques réparties de manière aléatoire par l'unité de transformation (2c) qui réalise cette même transformation de données de composition comme pour les fréquences de groupes initiaux, un écart de simulation ($T_i$) est calculé pour chaque vecteur de simulation ($\bar{z}_{bi}$) par rapport au vecteur de Benford ($\bar{z}_b$) sous la forme d'une distance de Mahalanobis au moyen d'une unité de détection (9b) et est enregistré dans une mémoire de contrôle (11) du dispositif de contrôle (1), selon lequel, après qu'un groupe de valeurs de données numériques est lu par le biais d'une interface d'entrée (7) du dispositif de contrôle (1), un vecteur de test (z) et un écart de test (T) du vecteur de test (z) par rapport au vecteur de Benford ($\bar{z}_b$) sous la forme d'une distance de Mahalanobis sont calculés par l'unité de détection (9a) à partir des fréquences des groupes de chiffres initiaux dans les valeurs de données numériques des groupes par l'unité de transformation (2a), après quoi le nombre relatif (p) desdits écarts de simulations enregistrés ($T_i$) est calculé par une unité de contrôle (12) du dispositif de contrôle (1), écarts qui sont supérieurs à l'écart de test (T) et une valeur de manipulation positive est émise par le biais d'une interface de sortie (13) lorsque le nombre relatif est inférieur à une valeur seuil prédéfinie.

2. Procédé selon la revendication 1, **caractérisé en ce que** des catégories sont sélectionnées à l'aide de catégories de paramètres de filtres prédéfinies à partir d'un ensemble de données (8) de valeurs de données numériques associées à des catégories différentes avec une unité de filtre (14), et les valeurs de données numériques attribuées aux catégories sont transmises en tant que groupe à l'interface d'entrée (7) du dispositif de contrôle (1).

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

*   WO 2018211060 A1

**In der Beschreibung aufgeführte Nicht-Patentliteratur**

*   Combining Benford's Law and machine learning to detect money laundering. An actual Spanish court case. **AUFSATZ BADAL-VALERO ELENA et al.** Forensic Science International. Elsevier B.V, 11. November 2017, 24-34